# EUROPÄISCHE PATENTSCHRIFT

(11) **EP 3 093 168 B1**
(45) Veröffentlichungstag und Bekanntmachung des Hinweises auf die Patenterteilung: **18.11.2020**
(21) Anmeldenummer: 16450010.0
(22) Anmeldetag: 10.05.2016
(51) Int. Cl.: B60G 1/00, A61G 5/04, A61G 5/06, B60G 17/019, B60G 21/02, A61G 5/10, B60G 3/01

(54) **VIERRÄDRIGES FAHRZEUG, DESSEN RÄDER EINZELN IN LOTRECHTEN EBENEN BEWEGBAR SIND**
FOUR-WHEELED VEHICLE WHOSE WHEELS CAN BE MOVED INDIVIDUALLY VERTICALLY
VEHICULE A QUATRE ROUES DONT LES ROUES PEUVENT SE DEPLACER INDIVIDUELLEMENT A LA VERTICALE

(30) Priorität: 13.05.2015 AT 2992015
(43) Veröffentlichungstag der Anmeldung: 16.11.2016
(73) Patentinhaber: Spitzbart, Berthold, 1230 Wien (AT)
(72) Erfinder: Spitzbart, Berthold, 1230 Wien (AT)
(74) Vertreter: Rippel, Andreas

(56) Entgegenhaltungen:
- DE-A1-102013 000 724
- FR-A1- 2 645 080
- GB-A- 132 685
- US-A- 2 840 387
- US-A- 3 459 436
- US-A- 3 909 022
- US-A1- 2011 260 417

## Beschreibung

Die Erfindung bezieht sich auf ein vierrädriges Fahrzeug, dessen Räder einzeln in lotrechten Ebenen bewegbar sind, wobei diagonal gegenüber angeordnete Räder über je ein über Umlenkrollen geführtes Seil miteinander verbunden sind.

Es ist in vielen Fällen erwünscht, dass sich die Räder eines Fahrzeuges dem befahrenen Untergrund derart anpassen, dass der Fahrzeugkörper im Wesentlichen waagrecht bleibt, auch wenn ein Rad oder mehrere Räder z.B. in eine Senke gelangen.

In der US 3459436 A ist ein vierrädriges Fahrzeug mit den eingangs genannten Merkmalen beschrieben. Dadurch wird erreicht, dass der Fahrzeugkörper in einer vorbestimmten im Wesentlichen horizontalen Lage bleibt, auch wenn sich die Beladung verschiebt oder Stoßkräfte auf das sich auf einer Straße bewegende Fahrzeug einwirken.

In der GB 132 685 A ist eine ähnliche Anordnung beschrieben.

Nach einem aus der DE 102013000724 A1 ersichtlichen Vorschlag besteht das Fahrwerk eines motorisierten Rollstuhles aus zueinander parallelen und zueinander beabstandeten, sowie in Fahrtrichtung ausgerichteten Längsträgern, an denen jeweils ein Vorder- und Hinterrad angeordnet ist, wobei die Längsträger über pneumatische oder hydraulische Zylinder mit mindestens einem Verbindungsblock verbunden sind, an dem ein Sitz befestigt ist.

Eine derartige Anordnung ist äußerst aufwendig und teuer.

Die Erfindung hat es sich zum Ziel gesetzt, ein vierrädriges Fahrzeug zu schaffen, welches auch im Gelände eine Schiefstellung des Fahrzeuges verhindert.

Erreicht wird diese dadurch, dass eine der Umlenkrollen jedes Seils über einen Ausgleichsseilzug mit dem Fahrzeug verbunden ist und die Seile je einen Kettenzug aufweisen, die von je einem Motor bewegbar sind, wobei zur Steuerung der Motoren Neigungssensoren angeordnet sind.

Die zentrale Verbindung der Seile garantiert eine gleichmäßige Verteilung der Last auf alle Räder. Durch die Motoren kann die horizontale Lage des Fahrzeugkörpers bzw. eines eventuellen Sitzes bei Rollstühlen erzwungen werden.

Die Federung des Fahrzeuges wirkt durch die Dehnbarkeit der Seile oder durch zusätzliche Federung am zentralen Aufhängungspunkt gleichmäßig auf das gesamte Fahrzeug und nicht nur auf einzelne Räder. Dies verhindert, dass sich das Fahrzeug im Ausmaß der Federung der Einzelräder oder des Rahmens nach unten neigt.

Um eine Höhenverstellung des Fahrzeuges zu ermöglichen greift nach einem weiteren Merkmal der Erfindung der Ausgleichsseilzug an einer Verstellschwinge an.

Die Führung der Seile erfolgt teilweise in nach oben ragenden und dann in die Waagrechte gebogenen Rohren.

Um eine Überwindung von Stufen zu ermöglichen kann mit einem Rad ein Sternrad wirkverbunden sein.

Nachstehend ist die Erfindung an Hand eines in den Zeichnungen dargestellten Ausführungsbeispieles näher beschrieben, ohne auf dieses Beispiel beschränkt zu sein. Dabei zeigen:
Fig.1 die wesentlichen Teile eines erfindungsgemäßen Fahrzeuges in schaubildlicher Ansicht;
Fig.2 eine Vorderansicht des Fahrzeuges nach Fig. 1;
Fig.3 ein Detail über die Aufhängung eines Rades;
Fig. 4 die Seilführung von einem Radträger zum diagonal gegenüberliegenden Radträger, wobei der Übersichtlichkeit wegen die zweite Seilführung weggelassen wurde;

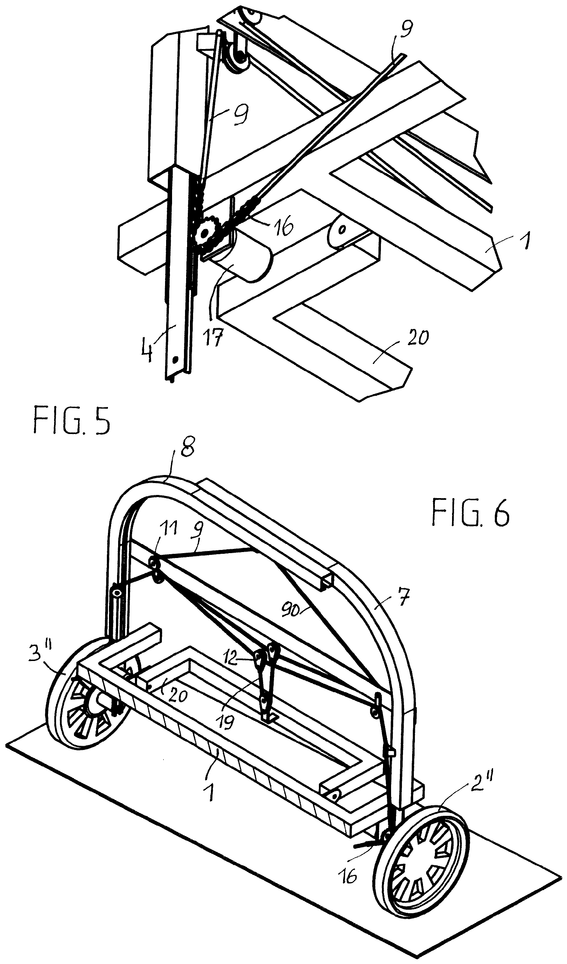

Fig. 5 die schaubildliche Ansicht von unten eines Details;
Fig. 6 die schaubildliche Ansicht des hinteren Teils eines erfindungsgemäßen Fahrzeuges;
Fig. 7 die Anordnung eines Sternrades;
Fig. 8 die Anordnung eines Neigungssensors.

Gemäß den Zeichnungen ist ein schematisch dargestelltes Fahrgestell 1 an vier Rädern 2', 2"; 3', 3" abgestützt, wobei die Räder 2' und 2" sowie 3' und 3" je diagonal gegenüberliegend angeordnet sind. Alle Räder sind an Radträgern 4 drehbar gelagert und die Radträger 4 sind in Rohren 5, 6, 7, 8 vertikal verschiebbar.

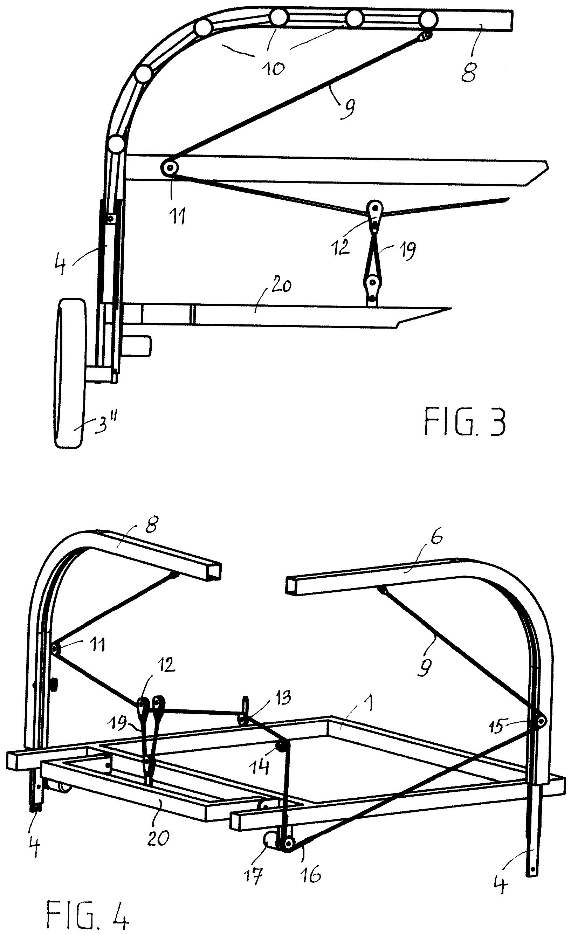

Insbesondere aus Fig. 4 im Zusammenhang mit Fig. 3 ist ersichtlich, wobei nur die Rohre 6 und 8 dargestellt sind, dass diagonal gegenüberliegende Räder 3', 3" bzw. Radträger 4 über ein Seil 9 miteinander verbunden sind.

Ein Ende dieses Seiles 9 ist, wie sich aus Fig. 3 ergibt, mit Hilfe von Rollen 10 im Rohr 8 geführt und greift am Radträger 4 des Rades 3" an.

Über Umlenkrollen 11, 12, 13, 14 und 15 ist das Seil 9 in das Innere des Rohres 6 zum diagonal gegenüberliegenden Radträger 4 geführt.

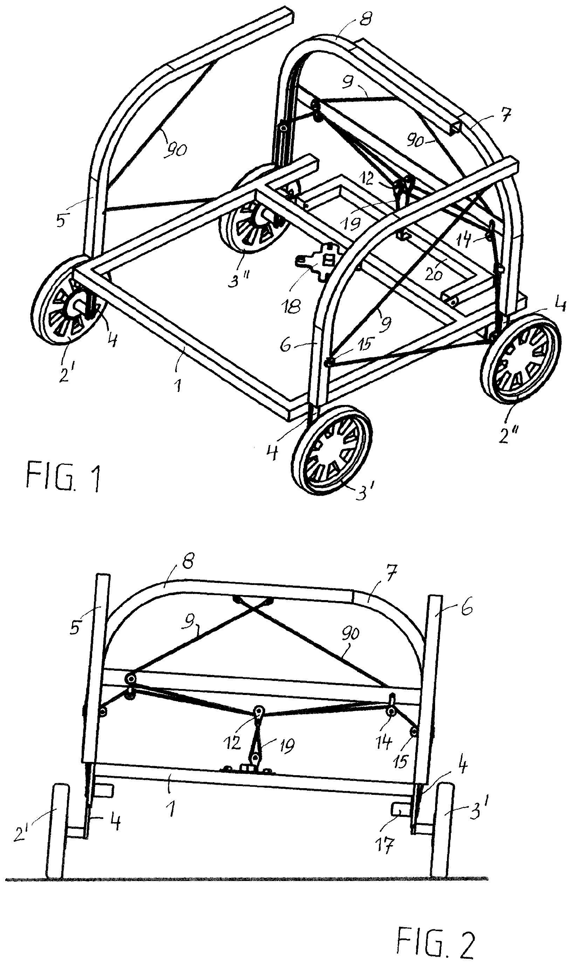

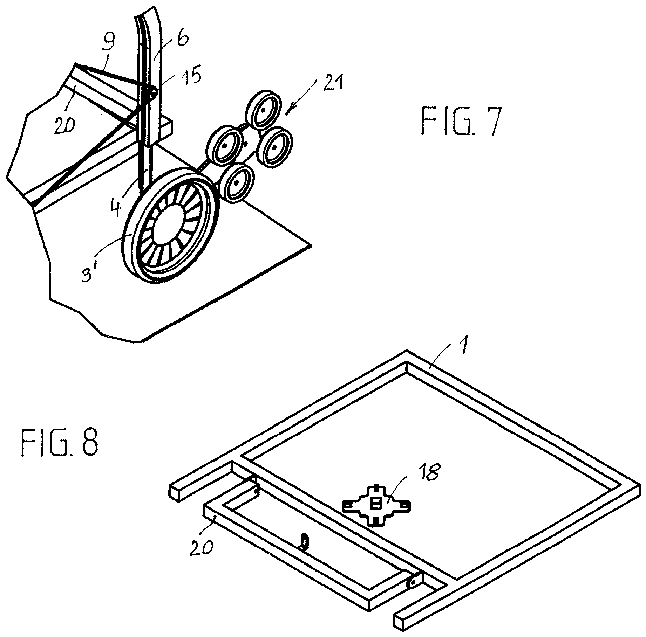

Das Seil 9 weist überdies einen Kettenzug 16 auf, der von einem Motor 17 bewegbar ist, wobei zur Steuerung des Motors 17 ein Neigungssensor 18 (Fig. 1, Fig. 8) angeordnet ist.

Die Umlenkrolle 12 ist an einem Ausgleichsseilzug 19 befestigt, der an einer Verstellschwinge 20 angreift.

Die Räder 2', 2" bzw. deren Radträger 4 sind in äquivalenter Weise über ein Seil 90 miteinander verbunden.

Die Rohre 5, 6, 7 und 8 sind im oberen Teil rechtwinkelig gekrümmt um eine höhere Position der die Last aufnehmenden Umlenkrollen zu ermöglichen.

Der Ausgleichsseilzug 19 bzw. der parallel dazu laufende Ausgleichsseilzug des anderen Rades stellt sicher, dass alle vier Räder 2', 2", 3', 3" auch dann den Boden berühren und auch dann die gleiche Last aufnehmen, wenn der Untergrund keine einheitliche Ebene bildet. Die Gleichverteilung der Last ist eine entscheidende Voraussetzung, um die Kraft von einem einzelnen angetriebenen Rad immer auf den Untergrund zu bringen und so, auch ohne alle Räder anzutreiben, ein Rutschen oder Durchdrehen zu verhindern.

Es ist aber auch ein erfindungsgemäßes vierrädriges Fahrzeug möglich, bei dem, wie im gezeichneten Beispiel keines der vier Räder angetrieben ist.

Der Motor 17 bzw. sein Gegenstück an der gegenüberliegenden Seite bewegt das Seil 9 bzw. das Seil 90 über den integrierten Kettenzug 16 in jene Richtung, die nötig ist um eine horizontale Lage wieder herzustellen. Die Steuerung erfolgt über Neigungssensoren 18. Vier Neigungssensoren 18 sind diagonal zur Fahrtrichtung angeordnet und zeigen daher jeweils zu einem Rad 2', 2", 3', 3". Wenn sich das Fahrzeug in Richtung eines Rades 2', 2", 3', 3" neigt, schaltet der entsprechende Neigungssensor 18 den Motor 17 in der Drehrichtung ein, sodass das Seil 9 oder 90 in die Richtung des höher liegenden Rades gezogen wird bis die Horizontalstellung wieder erreicht ist und dadurch der Neigungssensor 18 abschaltet.

Wenn sich das Fahrzeug zum Beispiel nach links vorne neigt, muss der Motor das entsprechende Seil nach hinten ziehen um eine Horizontalstellung zu erreichen. Wenn sich das Fahrzeug nach rechts hinten neigt, löst der Neigungssensor 18 rechts hinten aus und der Motor 17 dreht in die entgegengesetzte Richtung.

Wenn sich das Fahrzeug nach vorne, hinten oder zur Seite neigt, lösen entsprechend jeweils zwei Sensoren 18 aus und beide Motoren 17 drehen gleichzeitig solange in die entsprechende Richtung bis die Horizontalstellung wiederhergestellt ist und schalten dann ab.

Die diagonal gegenüberliegenden Neigungssensoren 18 schalten jeweils denselben Motor 17 in unterschiedliche Drehrichtungen. Der Aufhängung des Fahrzeugs an zwei durch einen Ausgleichsseilzug 19 verbundenen Seilen 9, 90 ermöglicht so die Horizontalstellung des Fahrzeugs unabhängig von der Geländeform und der Neigung des Fahrzeugs durch die entsprechende Schaltung der beiden Motoren.

Die Steuerung über Neigungssensoren 18 wird auch durch Fliehkräfte einer Kurvenfahrt ausgelöst und führt dann zu einer Neigung des Fahrzeugs zur Kurve hin und verhindert damit ein Kippen des Fahrzeugs.

Die Motoren blockieren, wenn das Fahrzeug nicht in Bewegung ist. Überschreitet die Neigung des Fahrzeuges einen vorgegebenen Winkel wird ebenfalls eine Blockierung ausgelöst.

Eine Höhenverstellung des Fahrzeuges kann über die Schwinge 20 erfolgen.

Für die Überwindung von Stufen kann ein mit einem Antriebsrad verbundenes Sternrad 21 (Fig. 7) eingesetzt werden.

Im Rahmen der Erfindung sind zahlreiche Abänderungen gegenüber dem beschriebenen Ausfuhrungsbeispiel möglich. So kann das Fahrzeug z.B. als Rollstuhl mit zwei größeren Rädern ausgebildet werden. Jedenfalls erlaubt die Erfindung Rollstühle und sonstige geländegängige Fahrzeuge zu konzipieren, die auch im Gelände oder auf Stufen ohne Kippgefahr betrieben werden können, bzw. bei Kurvenfahrt eine die Fliehkraft ausgleichende Neigung einnehmen. Die erfindungsgemäße Lösung ist grundsätzlich unabhängig von einem Antrieb und damit sowohl für verschiedene manuell- und motorbetriebene Rollstühle und Fahrzeuge anwendbar.

## Patentansprüche

1. Vierrädriges Fahrzeug, dessen Räder (2', 2", 3', 3") einzeln in lotrechten Ebenen bewegbar sind, wobei diagonal gegenüber angeordnete Räder (2', 2" oder 3', 3") über je ein über Umlenkrollen (11 bis 15) geführtes Seil (9, 90) miteinander verbunden sind, **dadurch gekennzeichnet, dass** eine (12) der Umlenkrollen jedes Seils (9, 90) über einen Ausgleichsseilzug (19) mit dem Fahrzeug verbunden ist und die Seile (9, 90) je einen Kettenzug (16) aufweisen, die von je einem Motor (17) bewegbar sind, wobei zur Steuerung-der Motoren (17) Neigungssensoren (18) angeordnet sind.

2. Vierrädriges Fahrzeug nach Anspruch 1, **dadurch gekennzeichnet, dass** der Ausgleichsseilzug (19) an einer Verstellschwinge (20) angreift.

3. Vierrädriges Fahrzeug nach Anspruch 1 oder 2, **dadurch gekennzeichnet, dass** die Seile (9, 90) teilweise in nach oben ragenden und dann in die Waagrechte gebogenen Rohren (5, 6, 7, 8) geführt sind.

4. Vierrädriges Fahrzeug nach einem der Ansprüche 1 bis 3, **dadurch gekennzeichnet, dass** mit einem Rad (3') ein Sternrad (21) wirkverbunden ist.

## Claims

1. A four-wheeled vehicle, the wheels (2', 2", 3', 3") of which are independently movable in vertical planes, wherein diagonally opposite wheels (2', 2" or 3', 3") are connected to each other by a respective cable (9, 90) guided over deflection rollers (11 to 15), **characterized in that** one (12) of the deflection rollers of each cable (9, 90) is connected to the vehicle via an equalizing traction cable (19), and the cables (9, 90) each having a chain section (16) movable by a respective motor (17), wherein level sensors (18) are arranged for controlling the motors (17).

2. The four-wheeled vehicle according to claim 1, **characterized in that** the equalizing traction cable (19) acts on an adjusting rocker (20).

3. The four-wheeled vehicle according to claim 1 or 2, **characterized in that** the cables (9, 90) are guided partially in tubes (5, 6, 7, 8) that project upward and then bend horizontally.

4. The four-wheeled vehicle according to any one of claims 1 or 3, **characterized in that** a star wheel (21) is operatively connected to a wheel (3').

## Revendications

1. Véhicule à quatre roues, dont les roues (2', 2", 3', 3") sont mobiles individuellement dans des plans perpendiculaires, sachant que les roues (2', 2" ou 3', 3") disposées opposées en diagonale sont reliées entre elles par un câble (9, 90) guidé respectivement par des galets de renvoi (11 à 15), **caractérisé en ce qu'**un (12) des galets de renvoi de chaque câble (9, 90) est relié au véhicule par une commande par câble à compensation (19) et les câbles (9, 90) comportent chacun un palan à chaîne (16) qui peuvent être déplacés chacun par un moteur (17), sachant que des capteurs d'inclinaison (18) sont disposés pour commander les moteurs (17).

2. Véhicule à quatre roues selon la revendication 1, **caractérisé en ce que** la commande par câble de compensation (19) vient en prise sur un bras oscillant de réglage (20).

3. Véhicule à quatre roues selon la revendication 1 ou 2, **caractérisé en ce que** les câbles (9, 90) sont guidés en partie dans les tubes dépassant vers le haut et ensuite dans les tubes pliés à l'horizontale (5, 6, 7, 8).

4. Véhicule à quatre roues selon l'une quelconque des revendications 1 à 3, **caractérisé en ce qu'**une roue étoile (21) est reliée de façon fonctionnelle à une roue (3').
